# EUROPEAN PATENT SPECIFICATION

(11) **EP 3 820 247 B1**
(45) Date of publication and mention of the grant of the patent: **01.06.2022**
(21) Application number: 19207325.2
(22) Date of filing: 05.11.2019
(51) Int. Cl.: H05B 6/06

(54) **INDUCTION HOB**
INDUKTIONSKOCHFELD
PLAQUE DE CUISSON À INDUCTION

(43) Date of publication of application: 12.05.2021
(73) Proprietor: ELECTROLUX APPLIANCES AKTIEBOLAG, 105 45 Stockholm (SE)
(72) Inventor: FORTI, Michele, 47122 Forli (IT); ZANGOLI, Massimo, 47122 Forli (IT); JEANNETEAU, Laurent, 60200 Compiègne (FR); VIROLI, Alex, 47122 Forli (IT)
(74) Representative: Electrolux Group Patents

(56) References cited:
- EP-A1- 2 914 059
- EP-A1- 3 562 268
- DE-A1-102010 039 508
- US-A1- 2012 312 804

## Description

The present invention relates generally to the field of induction-based cooking appliances. More specifically, the present invention relates to an induction hob, comprising at least one wide bandgap power transistor configured to work at higher frequencies in order to avoid acoustic noise.

### BACKGROUND OF THE INVENTION

Cooking appliances based on induction technology are known in prior art.

Specifically, induction hobs are known which comprise multiple induction coils for providing an inductive coupling between the cookware item and the induction coil. For powering the induction coils, heating power energy units are used which mainly use insulated gate bipolar transistor (IGBT) technology.

Disadvantageously, known cooking appliances provide only limited capabilities of lowering or avoiding acoustic noise.

In EP 3 562 268 A1, an induction heating device comprises a power supply configured to supply D.C. power and a plurality of resonant loads. Each of the resonant loads comprises a first node and a second node. The first nodes are in connection with the power supply. The device further comprises a plurality of first switching devices. One of the first switching devices is in connection with the second node of each one of the resonant loads. A second switching device is in connection with each of the first switching devices. A union of activation of one or more activated first switching devices and the second switching device supplies current from the power supply through the resonant loads in connection with the one or more activated first switching devices.

### SUMMARY OF THE INVENTION

It is an objective of the embodiments of the invention to provide an induction-based cooking appliance with an improved possibility of avoiding acoustic interference noise. The objective is solved by the features of the independent claims. Preferred embodiments are given in the dependent claims. If not explicitly indicated otherwise, embodiments of the invention can be freely combined with each other.

It is known in the art that such household cooking hobs or cooking appliances usually are provided for conducting at least one cooking process comprising heating and/or cooling step, respectively. Such cooking process preferably at least comprises a heating step, e.g. frying, boiling, simmering or pouching of a foodstuff or a cooking liquid, respectively. For supporting the foodstuff or cookware item, it is particularly known to provide a cooking support, for example in the form of a cooking surface. Such cooking surface usually provides a support for the cookware items, for example, provided in the form of a plate element, particularly a glass or glass ceramic plate.

Preferably, the cooking hob comprises, preferably consists of, a cooking support and a lower casing. Thereby it is preferred that an open top side of the lower casing is covered by at least a part of the cooking support. The cooking support may be provided particularly as at least one panel, wherein preferably the panel is a glass ceramic panel. Preferably, at least one or more heating power transferring elements are arranged beneath the panel.

The lower casing may be manufactured from different material comprising plastics or metal, e.g. aluminum.

In particular, such casing may include a bottom wall and at least one sidewall. It is preferred that said casing is made of metal, e.g. aluminium or steel, and/or plastics, wherein preferably the casing made of metal is grounded.

Advantageously said lower casing may comprise at least one heating power energy unit, particularly arranged in a respective heating power energy unit housing, the heating power transferring elements, heating power transferring element carrier or heating power transferring element support. In other words, the lower casing and the cooking support may form a closed unit comprising all essential parts of the cooking hob. Thereby the lower casing may comprise fastening means for fastening and/or arranging the cooking hob on top of or in a cutout of a work plate.

Thereby, preferably, a power transferring element may be arranged below a cooking support. Preferably, the one or more heating power transferring elements are arranged in an upper portion of the lower casing of the cooking hob. A power transferring element may be arranged and supported by one or more heating power transferring element carrier or heating power transferring element support, preferably the power transferring element attached and/or arranged on said carrier or support. A housing comprising an energy power unit may be arranged below one or more heating power transferring element carrier or heating power transferring element supports. Thereby, preferably a heating power transferring element carrier or heating power transferring element support with the supported heating power-transferring element may advantageously be arranged on top of and/or attached to such housing of an energy power unit.

For conducting the cooking process, particularly a heating step, a cooking appliance, particularly the lower casing, comprises at least one heating power-transferring element. Said heating power-transferring element is provided for transferring heating power to the foodstuff or cooking liquid, preferably contained in a cookware item.

Preferably, the at least one heating power transferring element is an electric heating element, in particular an induction heating element, particularly induction coil, and/or radiant heating element. The heating power provided by a heating power-transferring element may be preferably provided electrically. Preferably, the heating power may be provided by a heat-generating magnetic field, more particularly an induction field. Accordingly, the cooking hob of the present invention preferably is an induction hob.

Preferably, a heating power-transferring element in the form of an induction coil comprises a planar conductive winding wire, particularly a copper wire. Preferably, an induction coil comprises at least one magnetic field supporting element, e.g. a ferrite element. Preferably, said at least one magnetic field supporting element, particularly at least one ferrite element, is arranged below the plane of the conductive winding wire. Said at least one magnetic field supporting element, particularly ferrite element, is advantageous in establishing and/or supporting the high frequent alternating magnetic field of the induction coil. Said magnetic field supporting element, particularly if arranged below the conductive winding wire, may be glued to or supported by ferrite support elements, e.g. snap fit connectors or the like.

Preferably, an induction coil comprises a shielding element, e.g. a mica sheet. The shielding element preferably is adapted to the form of the planar conductive winding wire or the form of at least two planar conductive winding wires of at least two adjacently arranged coils. The shielding element preferably is provided above the at least one magnetic field supporting element, particularly at least one ferrite element. The shielding element preferably in its main function is a support for the planar conductive wire windings of the coil. However, additionally the shielding element, particularly mica sheet, may also shield temperature radiated from the above, e.g. resulting from a heated up pot bottom.

In the cooking hob of the present invention the at least one heating power transferring element is preferably arranged and/or mounted on a heating power transferring element carrier or heating power transferring element support, particularly comprised in the lower casing. It is particularly preferred that a carrier made of aluminum sheet metal supports the heating power-transferring element. Particularly, the cooking hob of the present invention may comprise power transferring element carrier or heating power transferring element support to support one heating power transferring element, however, it is also considered herein that one power transferring element carrier or heating power transferring element support is provided to support more than one heating power transferring element.

In a preferred embodiment of the present invention, two heating power transferring elements are arranged on and supported by one common heating power transferring element carrier. Particularly at least two induction coils are arranged on and supported by one common induction coil carrier plate.

The heating power transferring element carrier or heating power transferring element support may be advantageously supported by or on a housing of the heating energy power unit.

Particularly, at least one of, preferably all of, the heating power transferring elements of an cooking hob of the invention, more particularly an induction coil of an induction hob, may be arranged below a cooking support, particularly a cooking surface in form of a plate element, and particularly within the lower casing, in order to provide the heat for a heating step to a heating zone of the cooking support and to the bottom side of a cookware item and foodstuff, respectively, when placed on said heating zone.

A cooking support of a cooking hob of the invention, particularly of an induction hob of the invention, preferably comprises at least one heating zone. Such heating zone as referred to herein, preferably refers to a portion of the cooking support, particularly cooking surface, which is associated with one heating power transferring element, e.g. a radiant heating element or an induction coil, which is arranged at, preferably below, the cooking support, e.g. the glass ceramic plate. Particularly, in an embodiment according to which the cooking hob of the present invention is an induction hob, it is preferred that such heating zone refers to a portion of the cooking support, which is associated with at least one induction coil. Thereby, the heating power transferring elements associated with a heating zone are preferably configured such that the same heating power of the associated heating power transferring elements is transferred to the heating zone. Preferably, the heating zone thus refers to a portion of the cooking support to which the same heating power of the associated at least one heating power transferring element is transferred.

In addition, the cooking hob of the present invention, may particularly be configured such that in one operation mode one or more than one heating zones form one cooking zone and/or are combined to one cooking zone, respectively. A cooking zone may be particularly provided as at least a portion of the cooking surface. Particularly, such cooking zone is associated with at least one heating zone. Additionally, or alternatively, a cooking zone may be associated with more than one heating zone. Particularly, a cooking zone may be associated with an even number, particularly two, four, six, eight or ten, more particularly two, heating zones. Alternatively, a cooking zone may be associated with an uneven number, particularly three, five, seven or nine, more particularly three, heating zones.

Preferably, the cooking hob of the present invention is configured such that a cooking zone comprises one or more than one heating zones, which can be driven with the same or different power, frequency or heating level.

In the present invention, it is preferred that in at least one operation mode of the cooking hob according to the present invention is configured such that a cooking zone comprises at least two, preferably two, heating zones, driven by the same power, frequency or heating level. Particularly, such cooking zone comprises or is associated with at least two, preferably two, heating power-transferring elements.

Additionally, or alternatively, the cooking hob of the present invention may be configured such that the number of heating zones associated with one cooking zone may vary and/or may be adjustable dependent on the needs of the cook and/or the size, form or kind of cookware placed on the cooking surface.

Particularly, a cooking hob according to the present invention, preferably an electric hob, such as an induction hob, may comprise at least one heating power energy unit. A heating power energy unit as used herein, preferably provides energy to at least one of, preferable a number of, the heating power transferring elements such that the heating power transferring element is capable of transferring heating power for heating up the foodstuff or cooking liquid. A heating power energy unit of an induction hob, for example, may provide energy in the form of a high frequency alternating current to a heating power-transferring element in the form of an induction coil, which transfers heating power in the form of a magnetic field to a suitable cookware item. For such purpose, a heating power energy unit may comprise at least one associated power circuit mounted and/or arranged on at least one printed circuit board. Preferably, a heating power energy unit is supported and arranged in a housing, preferably a plastic housing, preferably arrangable in and adapted to the lower casing. This allows easy manufacturing and modularization.

Particularly, the housing may comprise supporting elements for supporting the heating power transferring element carrier or heating power transferring element support. Particularly, such supporting elements may comprise elastic means, e.g. springs or silicon elements, for elastically supporting the heating power transferring element carrier or heating power transferring element support, and particularly advantageous in pressing a heating power-transferring element onto the bottom surface of the cooking support plate, which particularly is a glass ceramic plate.

Particularly, the heating power energy unit, and particularly the associated power circuit, may be configured to be connected to at least one, preferably two phases of a mains supply. A cooking hob according to the present invention thereby comprises at least one, preferably two or three heating power energy units, connected to one or two, preferably one phases of the mains supply each.

Preferably, a heating power energy unit may comprise at least-one associated power circuit, particularly in the form of an at least one heating power generator, for generating heating power and supplying heating power-transferring elements with heating power, particularly for providing heating power to the at least one heating zone. Thereby the power circuit particularly may be provided in the form of a half-bridge configuration or a quasi-resonant configuration.

It will be immediately understood that the heating power energy unit may thus comprise one heating power generator for providing heating power to more than one heating zone, each associated with at least one heating power transferring element.

Furthermore, the heating power energy unit may comprise one heating power generator comprising a single or pair of high frequency switching elements, in the following also referred to as power transistor.

In particular, the high frequency switching element is provided in the form of a semiconductor-switching element, particularly an IGBT element.

In case the heating power energy unit may comprise one heating power generator comprising a single high frequency switching element, the single switching element preferably forms part of associated power circuit, provided in the form of a or a part of a Quasi Resonant circuit.

In case that the heating power energy unit may comprise one heating generator comprises a pair of high frequency switching elements, said pair of high frequency switching elements preferably forms part of an associated power circuit, provided in the form of a or a part of a half-bridge circuit.

A person skilled in the art will immediately understand that the heat, generated by and/or radiated from particularly the heating power transferring elements, the heating power energy unit and/or the cookware item, particularly the bottom thereof, may have also disadvantageous effects, particularly regarding safety and proper functioning. Particularly, the heating power energy unit, more particularly power circuits comprising switching elements, may generate a significant amount of heat being disadvantage for the safety and proper functioning of the cooking hob. For this reason, the cooking hob comprises at least one cooling means. Particularly, said cooling means is adapted for cooling down the electric and/or electronic elements. Particularly, the heating power energy unit may comprise such cooling means. Such cooling means may comprise at least one of a fan, a cooling channel, a cooling body, preferably from a metal, particularly aluminium, cooling air-guiding means, cooling air deflection means and the like. Particularly, the cooking hob of the present invention may comprise such cooling means for cooling at least one heating power generator or a part thereof, particularly to at least one single or pair of high frequency switching elements. More particularly, such cooling means may comprise a cooling body, preferably arranged in the air path of a cooling fan, and thermally connected to at least one heating power generator or a part thereof, particularly to at least one single or pair of high frequency switching elements. Thereby it is preferred that the cooling means comprises at least one fan for generating an air stream through the cooling channel. Preferably, the cooling channel and/or cooling body extends horizontally through the cooking hob. For example, the cooling channel and/or cooling body extends over a substantial part of the horizontal width of the cooking hob.

The cooking hob according to the present invention preferably further comprises a control unit. Such control unit is preferably operatively connected with the heating power energy unit to control at least one operational parameter of the cooking hob, particularly an operational parameter of the heating power energy unit. Furthermore, the control unit comprises a user interface at least for receiving a command input of a user. This advantageously allows the user to control at least one operational parameter of the cooking hob, particularly an operational parameter of the heating power energy unit. Moreover, the control unit, and particularly a user interface if present, may be operatively connected to other appliances or interfaces, e.g. a suction hood, a voice control device, a server, a remote interface, a cloud-computing source or the like.

Accordingly, the household cooking hob according to the present invention comprises at least one electric and/or electronic element. Particularly, said at least one electric and/or electronic element comprises a heating power energy unit and/or control unit or parts thereof.

Particularly, the at least one electric and/or electronic element of the household cooking hob of the present invention may be part of an at least one heating energy power unit, preferably mounted and/or arranged on a power board and/or a power generating circuit mounted on a printed circuit board (PCB).

Such at least one electric and/or electronic element may be, for example, selected from the group comprising a heating power generator, filter coils, EMC filters, rectifier, switching elements, like IGBTs, relays, or the like.

According to an aspect, the invention refers to an induction-based cooking appliance, specifically an induction hob. The induction-based cooking appliance comprises multiple heating power transferring elements, specifically induction coils, and multiple heating power energy units, specifically power boards, for powering said heating power transferring elements. Each heating power energy unit comprises one or more power transistors for providing electrical power to the heating power transferring elements.

In a first alternative, power transistors included in said multiple heating power energy units are wide bandgap transistors comprising semiconductor materials with a bandgap greater than 2eV. Said power transistors are configured to be operated in a first frequency range and in a second frequency range different to the first frequency range. Preferably, the frequency span from the lowest frequency of the first frequency range to the highest frequency of the second frequency range is 50kHz or higher, specifically 60kHz, 70kHz, 80kHz, 90kHz or 100kHz.

In a second alternative, a first heating power transferring element is powered by a heating power energy unit comprising a first type of power transistor adapted to be operated in a first frequency range and a second heating power transferring element is powered by a heating power energy unit comprising a second type of power transistor adapted to be operated in a second frequency range different to the first frequency range. It is worth mentioning that the power transistor is adapted to be switched at a frequency included in the respective frequency range in order to initiate an oscillation in an oscillation circuit in which the respective heating power transferring element is included.

Said appliance is advantageous because due to using either wide bandgap transistors which can be operated in a broad frequency band or different types of power transistors which are structurally configured to be operated in different frequency ranges, it is possible to choose the frequencies of first and second heating power transferring element such that a greater frequency gap can be obtained. Thereby acoustic noise can be lowered significantly.

According to an embodiment, said wide bandgap transistors are transistors based on silicon carbide (SiC), gallium nitride (GaN) or Boron nitride (BN). Using those materials it is possible to design power electronics, specifically transistors which provide switching operation in a broad frequency band, specifically in a frequency band of 50kHz or higher, specifically 60kHz, 70kHz, 80kHz, 90kHz or 100kHz.

According to an embodiment, the first type of power transistor is an insulated-gate bipolar transistor, specifically a silicon-based insulated-gate bipolar transistor. Said transistor may have a bandgap lower than 2eV. Such type of power transistor can be driven in a first frequency range below the second frequency range.

According to an embodiment, the second type of power transistor is metal-oxide-semiconductor field-effect transistor, specifically a silicon-carbide metal-oxide-semiconductor field-effect transistor. For example, said second type of power transistor may be a bandgap transistor including semiconductor material comprising silicon carbide (SiC), gallium nitride (GaN) or Boron nitride (BN). Such type of power transistor can be driven in a second frequency range above the first frequency range.

According to an embodiment, the first frequency range and the second frequency range are separated from each other by a frequency gap of at least 10kHz. By using such frequency gap, it is possible to choose the frequency of the first type of power transistor close to the upper boundary of the first frequency range and the frequency of the second type of power transistor close to the lower range of the second frequency range and also get sufficient frequency spacing.

According to an embodiment, the first type of power transistor is configured to be powered in a frequency range of 20kHz to 50kHz. Also further frequency ranges in the neighbourhood of before-mentioned range are possible, e.g. 30kHz to 60kHz, etc. Said frequency is preferably suitable for insulated-gate bipolar transistors.

According to an embodiment, the second type of power transistor is configured to be powered in a frequency range of 60kHz to 90kHz. Also further frequency ranges in the neighbourhood of before-mentioned range are possible, e.g. 70kHz to 100kHz, etc. Said frequency is preferably suitable for metal-oxide-semiconductor field-effect transistors, for example based on wide bandgap materials like silicon carbide (SiC), gallium nitride (GaN) or Boron nitride (BN).

According to an embodiment, the first heating power transferring element is arranged next to the second heating power transferring element, specifically directly next to the second heating power transferring element. So even if the heating power transferring elements are neighbored quite closely, acoustic noise generation can be avoided due to frequency spreading.

According to an embodiment, said wide bandgap transistors are configured to be operated in a frequency range from 20kHz to 90 kHz. Also further frequency ranges in the neighbourhood of before-mentioned range are possible, e.g. 30kHz to 100kHz, etc. Thereby, the power transistors can be operated in a broader frequency range than silicon-based power transistors which allows a broader spreading of switching frequencies in order to reduce acoustic noise.

According to a further aspect, the invention relates to a method for operating an induction-based cooking appliance, specifically an induction hob. According to a first alternative, said multiple heating power energy units comprise power transistors which are wide bandgap transistors comprising semiconductor materials with a bandgap greater than 2eV, wherein at least one of said power transistors is operated in a first frequency range and another one of said power transistors is operated in a second frequency range different to the first frequency range, specifically having no overlap with the first frequency range. According to a second alternative, the first type of power transistor included in the first heating power energy unit is operated in a first frequency range and the second type of power transistor included in the second heating power energy unit is operated in the second frequency range, said second frequency range being a frequency range having no overlap with the first frequency range.

According to an embodiment of the method, said wide bandgap transistors are transistors based on silicon carbide (SiC), gallium nitride (GaN) or Boron nitride (BN). Using those materials it is possible to design power electronics, specifically transistors which provide switching operation in a broad frequency band, specifically in a frequency band of 50kHz or higher, specifically 60kHz, 70kHz, 80kHz, 90kHz or 100kHz.

According to an embodiment of the method, the first type of power transistor is a transistor, having a semiconductor material with a bandgap lower than 2eV, specifically a silicon-based insulated-gate bipolar transistor. Such type of power transistor can be driven in a first frequency range below the second frequency range.

According to an embodiment of the method, the second type of power transistor is a wide bandgap transistor, specifically a transistor including a semiconductor material selected from the following list of semiconductor materials: silicon carbide, gallium nitride or boron nitride. Such type of power transistor can be driven in a second frequency range above the first frequency range.

According to an embodiment of the method, the first type of power transistor is powered in a frequency range of 20kHz to 50kHz. Also further frequency ranges in the neighbourhood of before-mentioned range are possible, e.g. 30kHz to 60kHz, etc. Said frequency is preferably suitable for silicon-based insulated-gate bipolar transistors.

According to an embodiment of the method, the second type of power transistor is powered in a frequency range of 60kHz to 90kHz. Also further frequency ranges in the neighbourhood of before-mentioned range are possible, e.g. 70kHz to 100kHz, etc. Said frequency is preferably suitable for wide bandgap transistors including a semiconductor material selected from the group of silicon carbide, gallium nitride or boron nitride.

According to an embodiment of the method, said wide bandgap transistors are configured to be operated in a frequency range from 20kHz to 90kHz. Also further frequency ranges in the neighbourhood of before-mentioned range are possible, e.g. 30kHz to 100kHz, etc. So, by using wide bandgap transistors as power transistors in the heating power energy units, the frequency ranges can be spread over a larger frequency range, i.e. one wide bandgap transistor can be operated at the lower frequency range portion and another wide bandgap transistor can be operated at the upper frequency range portion.

The term "power transistor type" as used in the present disclosure may refer to a certain class of power transistors which are characterized by a certain structural features like transistor material, transistor structure etc.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example top view on a cooking appliance comprising multiple heating zones; and
- Fig. 2: shows a frequency diagram comprising a first and a second frequency range.

### DETAILED DESCRIPTION OF PREFERRED EMBODIMENTS

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

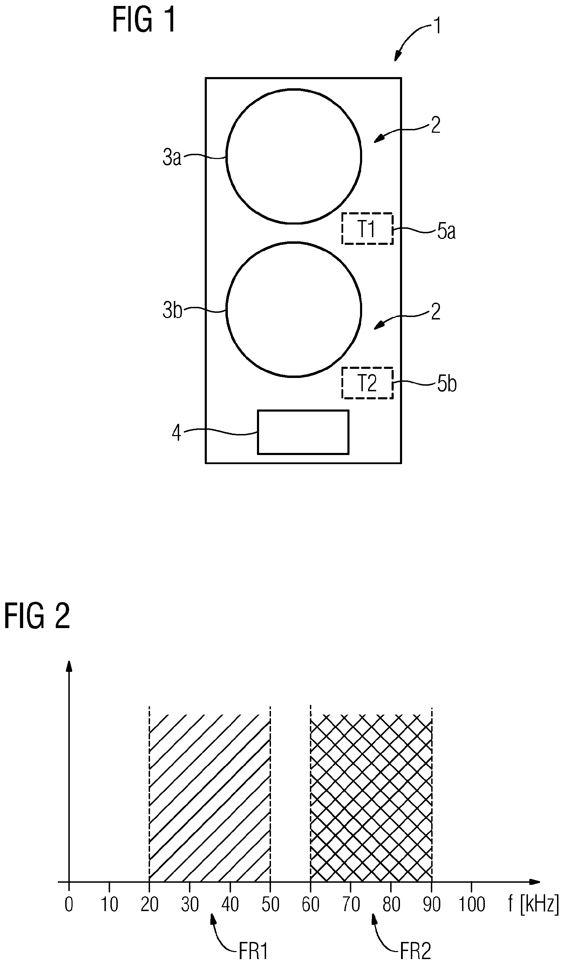

Fig. 1 illustrates a schematic diagram of an electric induction hob 1.

The induction hob 1 comprises multiple heating zones 2. Each heating zone 2 may be, for example, associated with one or more heating power transferring elements 3a, 3b, specifically, one or more induction coils. In the present embodiment, each heating zone 2 is associated with a single heating power transferring element 3a, 3b. However, according to other embodiments, a heating zone 2 may be associated with multiple heating power transferring elements.

In addition, the cooking appliance 1 comprises a user interface 4, based on which a user may control the induction hob 1. For example, based on the user interface 4, the user may control the power level of the heating zones 2.

For powering the heating power transferring elements 3a, 3b, two or more heating power energy units 5a, 5b are provided. For example, a first heating power energy unit 5a may be electrically coupled with a first heating power transferring element 3a in order to provide electrical power to said first heating power transferring element 3a. Similarly, a second heating power energy unit 5b may be electrically coupled with a second heating power transferring element 3b in order to provide electrical power to said second heating power transferring element 3b.

In order to generate a pulsed electrical signal based on which a resonant circuit, in which the respective heating power transferring elements 3a, 3b are included, is excited, the heating power energy units 5a, 5b comprise power transistors.

In a first embodiment, the heating power energy units 5a, 5b comprise different types of power transistors. More in detail, the first heating power energy unit 5a comprises a first type T1 of power transistor, whereas the second heating power energy unit 5b comprises a second type T2 of power transistor.

The power transistor of first type T1 is configured to be operated in a first frequency range FR1. In contrary thereto, the power transistor of second type T2 is configured to be operated in a second frequency range FR2 which is different to the first frequency range FR1. Preferably, said first frequency range FR1 covers a frequency band which is totally different to frequency band covered by the second frequency range FR2. So, in other words, the first and second frequency ranges FR1, FR2 do not overlap, as shown in Fig. 2.

According to an embodiment, the first type T1 of power transistor may be an insulated gate bipolar transistor (IGBT). Preferably, a silicon-based insulated gate bipolar transistor may be used. The insulated gate bipolar transistor may be, for example, configured to be operated in a first frequency range FR1 which covers the frequency band between 20KHz and 50KHz. Such silicon -based power transistors are preferable for cost reasons.

Furthermore, the second type T2 of power transistor may be a metal-oxide-semiconductor field-effect transistor (MOSFET). Said power transistor may comprise a wide bandgap semiconductor material, for example selected from the list of silicon carbide, gallium nitride and boron nitride. Preferably, a silicon-carbide metal-oxide-semiconductor field-effect transistor may be used. The metal-oxide-semiconductor field-effect transistor may be, for example, configured to be operated in a second frequency range FR2 which comprise higher frequencies than the first frequency range FR1. Preferably, the second frequency range FR2 covers the frequency band between 60KHz and 90KHz.

By using different types of transistors, it is possible to define separate frequency windows for adjacent heating power transferring elements 3a, 3b and thereby spread the frequencies at which the heating power transferring elements 3a, 3b are operated. Thereby, acoustic interference noise can be avoided or at least mitigated.

Within the respective frequency range FR1, FR2, the operation frequency at which the respective heating power transferring element 3a, 3b is driven, can be chosen according to the respective operation conditions.

According to another embodiment, both heating power energy units 5a, 5b arranged next to each other comprise wide bandgap power transistors. Wide bandgap power transistors are capable to be operated in a broad frequency range specifically in a range from 20kHz to 90kHz. Using wide bandgap power transistors in both heating power energy units 5a, 5b arranged next to each other may be disadvantageous in view of costs. However, such configuration provides a greater flexibility regarding switching frequency.

It should be noted that the description and drawings merely illustrate the principles of the proposed invention. Those skilled in the art will be able to implement various arrangements that, although not explicitly described or shown herein, embody the principles of the invention.

### List of reference numerals

- 1: induction hob
- 2: heating zone
- 3a, 3b: heating power transferring element
- 4: user interface
- 5a, 5b: heating power energy unit

- FR1: first frequency range
- FR2: second frequency range
- T1: first type of power transistor
- T2: second type of power transistor

## Claims

1. Induction-based cooking appliance comprising multiple heating power transferring elements (3a, 3b) and multiple heating power energy units (5a, 5b) for powering said heating power transferring elements (3a, 3b), each heating power energy unit (5a, 5b) comprising one or more power transistors for providing electrical power to the heating power transferring elements (3a, 3b),
**characterized in that**
- said power transistors included in said multiple heating power energy units (5a, 5b) are wide bandgap transistors comprising semiconductor materials with a bandgap greater than 2eV configured to be operated in a first frequency range (FR1) and in a second frequency range (FR2) different to the first frequency range (FR1); or
- a first heating power transferring element (3a) is powered by a heating power energy unit (5a) comprising a first type (T1) of power transistor adapted to be operated in a first frequency range (FR1) and a second heating power transferring element (3b) is powered by a heating power energy unit (5b) comprising a second type (T2) of power transistor adapted to be operated in a second frequency range (FR2) different to the first frequency range (FR1).

2. Induction-based cooking appliance according to claim 1, wherein said wide bandgap transistors are transistors based on silicon carbide, gallium nitride or boron nitride.

3. Induction-based cooking appliance according to claim 1 or 2, wherein the first type (T1) of power transistor is a transistor having a material with a bandgap lower than 2eV, specifically a silicon-based insulated-gate bipolar transistor.

4. Induction-based cooking appliance to anyone of the preceding claims, wherein the second type (T2) of power transistor is a wide bandgap transistor, specifically a transistor including silicon carbide, gallium nitride or boron nitride.

5. Induction-based cooking appliance according to anyone of the preceding claims, wherein the first frequency range (FR1) and the second frequency range (FR2) are separated from each other by a frequency gap of at least 10kHz.

6. Induction-based cooking appliance according to anyone of the preceding claims, wherein the first type (T1) of power transistor is configured to be powered in a frequency range of 20kHz to 50kHz.

7. Induction-based cooking appliance according to anyone of the preceding claims, wherein the second type (T2) of power transistor is configured to be powered in a frequency range of 60kHz to 90kHz.

8. Induction-based cooking appliance according to anyone of the preceding claims, wherein the first heating power transferring element (3a) is arranged next to the second heating power transferring element (3b), specifically directly next to the second heating power transferring element (3b).

9. Induction-based cooking appliance according to anyone of the preceding claims, wherein said wide bandgap transistors are configured to be operated in a frequency range from 20kHz to 90kHz.

10. Method for operating an induction-based cooking appliance, the cooking appliance (1) comprising multiple heating power transferring elements (3a, 3b) and multiple heating power energy units (5a, 5b) for powering said heating power transferring elements (3a, 3b),
**characterized in that**
- said multiple heating power energy units (5a, 5b) comprise power transistors which are wide bandgap transistors comprising semiconductor materials with a bandgap greater than 2eV wherein at least one of said power transistors is operated in a first frequency range (FR1) and another one of said power transistors is operated in a second frequency range (FR2) different to the first frequency range (FR1); or
- a first heating power energy unit (5a) comprises a first type (T1) of power transistor and a second heating power energy unit (5b) comprises a second type (T2) of power transistor, and the first type (T1) of power transistor included in the first heating power energy unit (5a) is operated in a first frequency range (FR1) and the second type (T2) of power transistor included in the second heating power energy unit (5b) is operated in the second frequency range (FR2), said second frequency range (FR2) being a frequency range having no overlap with the first frequency range (FR1).

11. Method according to claim 10, wherein said wide bandgap transistors are transistors based on silicon carbide, gallium nitride or boron nitride.

12. Method according to claim 10 or 11, wherein the first type (T1) of power transistor is a transistor having a material with a bandgap lower than 2eV, specifically a silicon-based insulated-gate bipolar transistor.

13. Method according to anyone of claims 10 to 12, wherein the second type (T2) of power transistor is a wide bandgap transistor, specifically a transistor including silicon carbide, gallium nitride or boron nitride.

14. Method according to anyone of claims 10 to 13, wherein the first type (T1) of power transistor is powered in a frequency range of 20kHz to 50kHz and/or the second type (T2) of power transistor is powered in a frequency range of 60kHz to 90kHz.

15. Method according to anyone of claims 10 to 14, wherein said wide bandgap transistors are configured to be operated in a frequency range from 20kHz to 90kHz.

## Patentansprüche

1. Induktionskochgerät mit mehreren Heizleistungs-Übertragungselementen (3a, 3b) und mehreren Heizleistungs-Energieeinheiten (5a, 5b) zur Versorgung der Heizleistungs-Übertragungselemente (3a, 3b), wobei jede Heizleistungs-Energieeinheit (5a, 5b) einen oder mehrere Leistungstransistoren zur Bereitstellung elektrischer Leistung für die Heizleistungs-Übertragungselemente (3a, 3b) umfasst,
**dadurch gekennzeichnet, dass**
- die Leistungstransistoren, die in den mehreren Heizleistungs-Energieeinheiten (5a, 5b) enthalten sind, Transistoren mit breiter Bandlücke sind, die Halbleitermaterialien mit einer Bandlücke von mehr als 2 eV umfassen, die so ausgebildet sind, dass sie in einem ersten Frequenzbereich (FR1) und in einem zweiten Frequenzbereich (FR2), der sich von dem ersten Frequenzbereich (FR1) unterscheidet, betrieben werden; oder
- ein erstes Heizleistungs-Übertragungselement (3a) von einer Heizleistungs-Energieeinheit (5a) gespeist wird, die einen ersten Typ (T1) eines Leistungstransistors umfasst, der geeignet ist, in einem ersten Frequenzbereich (FR1) betrieben zu werden, und ein zweites Heizleistungs-Übertragungselement (3b) von einer Heizleistungs-Energieeinheit (5b) gespeist wird, die einen zweiten Typ (T2) eines Leistungstransistors umfasst, der geeignet ist, in einem zweiten Frequenzbereich (FR2) betrieben zu werden, der sich von dem ersten Frequenzbereich (FR1) unterscheidet.

2. Induktionskochgerät gemäß Anspruch 1, wobei die Transistoren mit breiter Bandlücke Transistoren auf Basis von Siliziumkarbid, Galliumnitrid oder Bornitrid sind.

3. Induktionskochgerät gemäß Anspruch 1 oder 2, wobei der erste Typ (T1) des Leistungstransistors ein Transistor ist, der ein Material mit einer Bandlücke von weniger als 2 eV aufweist, insbesondere ein Silizium-basierter Bipolartransistor mit isoliertem Gate.

4. Induktionskochgerät gemäß einem der vorhergehenden Ansprüche, wobei der zweite Typ (T2) des Leistungstransistors ein Transistor mit breiter Bandlücke ist, insbesondere ein Transistor, der Siliziumkarbid, Galliumnitrid oder Bornitrid enthält.

5. Induktionskochgerät gemäß einem der vorhergehenden Ansprüche, wobei der erste Frequenzbereich (FR1) und der zweite Frequenzbereich (FR2) durch eine Frequenzlücke von mindestens 10 kHz voneinander getrennt sind.

6. Induktionskochgerät gemäß einem der vorhergehenden Ansprüche, wobei der erste Typ (T1) des Leistungstransistors so ausgebildet ist, dass er in einem Frequenzbereich von 20 kHz bis 50 kHz betrieben wird.

7. Induktionskochgerät gemäß einem der vorhergehenden Ansprüche, wobei der zweite Typ (T2) des Leistungstransistors so ausgebildet ist, dass er in einem Frequenzbereich von 60 kHz bis 90 kHz betrieben wird.

8. Induktionskochgerät gemäß einem der vorhergehenden Ansprüche, wobei das erste Heizleistungs-Übertragungselement (3a) neben dem zweiten Heizleistungs-Übertragungselement (3b), insbesondere unmittelbar neben dem zweiten Heizleistungs-Übertragungselement (3b), angeordnet ist.

9. Induktionskochgerät gemäß einem der vorhergehenden Ansprüche, wobei die Transistoren mit breiter Bandlücke für den Betrieb in einem Frequenzbereich von 20 kHz bis 90 kHz ausgebildet sind.

10. Verfahren zum Betreiben eines Induktionskochgerätes, wobei das Kochgerät (1) mehrere Heizleistungs-Übertragungselemente (3a, 3b) und mehrere Heizleistungs-Energieeinheiten (5a, 5b) zum Versorgen der Heizleistungs-Übertragungselemente (3a, 3b) umfasst, **dadurch gekennzeichnet, dass**
- die mehreren Heizleistungs-Energieeinheiten (5a, 5b) Leistungstransistoren umfassen, die Transistoren mit breiter Bandlücke sind und Halbleitermaterialien mit einer Bandlücke von mehr als 2 eV umfassen,
wobei mindestens einer der Leistungstransistoren in einem ersten Frequenzbereich (FR1) und ein anderer der Leistungstransistoren in einem zweiten Frequenzbereich (FR2), der sich von dem ersten Frequenzbereich (FR1) unterscheidet, betrieben wird; oder
- eine erste Heizleistungs-Energieeinheit (5a) einen ersten Typ (T1) von Leistungstransistor und eine zweite Heizleistungs-Energieeinheit (5b) einen zweiten Typ (T2) von Leistungstransistor umfasst, und
der erste Typ (T1) des Leistungstransistors, der in der ersten Heizleistungs-Energieeinheit (5a) enthalten ist, in einem ersten Frequenzbereich (FR1) betrieben wird, und der zweite Typ (T2) des Leistungstransistors, der in der zweiten Heizleistungs-Energieeinheit (5b) enthalten ist, in dem zweiten Frequenzbereich (FR2) betrieben wird, wobei der zweite Frequenzbereich (FR2) ein Frequenzbereich ist, der keine Überlappung mit dem ersten Frequenzbereich (FR1) aufweist.

11. Verfahren gemäß Anspruch 10, wobei die Transistoren mit breiter Bandlücke Transistoren auf der Basis von Siliziumkarbid, Galliumnitrid oder Bornitrid sind.

12. Verfahren gemäß Anspruch 10 oder 11, wobei der erste Typ (T1) des Leistungstransistors ein Transistor ist, der ein Material mit einer Bandlücke von weniger als 2 eV hat, insbesondere ein Silizium-basierter Bipolartransistor mit isoliertem Gate.

13. Verfahren gemäß einem der Ansprüche 10 bis 12, wobei der zweite Typ (T2) des Leistungstransistors ein Transistor mit breiter Bandlücke ist, insbesondere ein Transistor, der Siliziumkarbid, Galliumnitrid oder Bornitrid enthält.

14. Verfahren gemäß einem der Ansprüche 10 bis 13, wobei der erste Typ (T1) des Leistungstransistors in einem Frequenzbereich von 20 kHz bis 50 kHz und/oder der zweite Typ (T2) des Leistungstransistors in einem Frequenzbereich von 60 kHz bis 90 kHz gespeist wird.

15. Verfahren gemäß einem der Ansprüche 10 bis 14, wobei die Transistoren mit breiter Bandlücke für den Betrieb in einem Frequenzbereich von 20 kHz bis 90 kHz ausgebildet sind.

## Revendications

1. Appareil de cuisson à induction comprenant de multiples éléments de transfert de puissance de chauffage (3a, 3b) et de multiples unités d'énergie de puissance de chauffage (5a, 5b) pour alimenter lesdits éléments de transfert de puissance de chauffage (3a, 3b), chaque unité d'énergie de puissance de chauffage (5a, 5b) comprenant un ou plusieurs transistors de puissance pour fournir une puissance électrique aux éléments de transfert de puissance de chauffage (3a, 3b), **caractérisé en ce que** :
- lesdits transistors de puissance inclus dans lesdites multiples unités d'énergie de puissance de chauffage (5a, 5b) sont des transistors à large bande interdite comprenant des matériaux semi-conducteurs avec une bande interdite supérieure à 2 eV configurés pour fonctionner dans une première plage de fréquences (FR1) et dans une seconde plage de fréquences (FR2) différente de la première plage de fréquences (FR1) ; ou
- un premier élément de transfert de puissance de chauffage (3a) est alimenté par une unité d'énergie de puissance de chauffage (5a) comprenant un premier type (T1) de transistor de puissance adapté pour fonctionner dans une première plage de fréquences (FR1) et un second élément de transfert de puissance de chauffage (3b) est alimenté par une unité d'énergie de puissance de chauffage (5b) comprenant un second type (T2) de transistor de puissance adapté pour fonctionner dans une seconde plage de fréquences (FR2) différente de la première plage de fréquences (FR1).

2. Appareil de cuisson à induction selon la revendication 1, dans lequel lesdits transistors à large bande interdite sont des transistors à base de carbure de silicium, de nitrure de gallium ou de nitrure de bore.

3. Appareil de cuisson à induction selon la revendication 1 ou la revendication 2, dans lequel le premier type (T1) de transistor de puissance est un transistor ayant un matériau à bande interdite inférieure à 2 eV, spécifiquement un transistor bipolaire à grille isolée à base de silicium.

4. Appareil de cuisson à induction selon l'une quelconque des revendications précédentes, dans lequel le second type (T2) de transistor de puissance est un transistor à large bande interdite, spécifiquement un transistor comprenant du carbure de silicium, du nitrure de gallium ou du nitrure de bore.

5. Appareil de cuisson à induction selon l'une quelconque des revendications précédentes, dans lequel la première plage de fréquences (FR1) et la seconde plage de fréquences (FR2) sont séparées l'une de l'autre par un écart de fréquence d'au moins 10 kHz.

6. Appareil de cuisson à induction selon l'une quelconque des revendications précédentes, dans lequel le premier type (T1) de transistor de puissance est configuré pour être alimenté dans une plage de fréquences s'étendant de 20 kHz à 50 kHz.

7. Appareil de cuisson à induction selon l'une quelconque des revendications précédentes, dans lequel le second type (T2) de transistor de puissance est configuré pour être alimenté dans une plage de fréquences s'étendant de 60 kHz à 90 kHz.

8. Appareil de cuisson à induction selon l'une quelconque des revendications précédentes, dans lequel le premier élément de transfert de puissance de chauffage (3a) est disposé à côté du second élément de transfert de puissance de chauffage (3b), spécifiquement directement à côté du second élément de transfert de puissance de chauffage (3b).

9. Appareil de cuisson à induction selon l'une quelconque des revendications précédentes, dans lequel lesdits transistors à large bande interdite sont configurés pour fonctionner dans une plage de fréquences s'étendant de 20 kHz à 90 kHz.

10. Procédé pour faire fonctionner un appareil de cuisson à induction, l'appareil de cuisson (1) comprenant de multiples éléments de transfert de puissance de chauffage (3a, 3b) et de multiples unités d'énergie de puissance de chauffage (5a, 5b) pour alimenter lesdits éléments de transfert de puissance de chauffage (3a, 3b), **caractérisé en ce que**
- lesdites multiples unités d'énergie de puissance de chauffage (5a, 5b) comprennent des transistors de puissance qui sont des transistors à large bande interdite comprenant des matériaux semi-conducteurs avec une bande interdite supérieure à 2 eV, où au moins un desdits transistors de puissance fonctionne dans une première plage de fréquences (FR1) et un autre desdits transistors de puissance fonctionne dans une seconde plage de fréquences (FR2) différente de la première plage de fréquences (FR1) ; ou
- une première unité d'énergie de puissance de chauffage (5a) comprend un premier type (T1) de transistor de puissance et une seconde unité d'énergie de puissance de chauffage (5b) comprend un second type (T2) de transistor de puissance, et le premier type (T1) de transistor de puissance inclus dans la première unité d'énergie de puissance de chauffage (5a) fonctionne dans une première plage de fréquences (FR1) et le second type (T2) de transistor de puissance inclus dans la seconde unité d'énergie de puissance de chauffage (5b) fonctionne dans la seconde plage de fréquences (FR2), ladite seconde plage de fréquences (FR2) étant une plage de fréquences n'ayant aucun chevauchement avec la première plage de fréquences (FR1).

11. Procédé selon la revendication 10, dans lequel lesdits transistors à large bande interdite sont des transistors à base de carbure de silicium, de nitrure de gallium ou de nitrure de bore.

12. Procédé selon la revendication 10 ou la revendication 11, dans lequel le premier type (T1) de transistor de puissance est un transistor ayant un matériau à bande interdite inférieure à 2 eV, spécifiquement un transistor bipolaire à grille isolée à base de silicium.

13. Procédé selon l'une quelconque des revendications 10 à 12, dans lequel le second type (T2) de transistor de puissance est un transistor à large bande interdite, spécifiquement un transistor comprenant du carbure de silicium, du nitrure de gallium ou du nitrure de bore.

14. Procédé selon l'une quelconque des revendications 10 à 13, dans lequel le premier type (T1) de transistor de puissance est alimenté dans une plage de fréquences s'étendant de 20 kHz à 50 kHz et/ou le second type (T2) de transistor de puissance est alimenté dans une plage de fréquences s'étendant de 60 kHz à 90 kHz.

15. Procédé selon l'une quelconque des revendications 10 à 14, dans lequel lesdits transistors à large bande interdite sont configurés pour être alimentés dans une plage de fréquences s'étendant de 20 kHz à 90 kHz.
